Europäisches Patentamt

**European Patent Office**

**Office européen des brevets**

(11) Publication number: **0 001 474**
A1

(12) **EUROPEAN PATENT APPLICATION**

(21) Application number: 78300224.9

(22) Date of filing: 01.08.78

(51) Int. Cl.²: **G 01 N 29/04,** F 17 D 5/00,
F 16 L 55/00

(30) Priority: 23.08.77 GB 35352/77

(43) Date of publication of application: 18.04.79
Bulletin 79/8

(84) Designated Contracting States: DE FR GB NL

(71) Applicant: **British Gas Corporation, 59 Bryanston
Street, London, W1A 2AZ (GB)**

(72) Inventor: **Duffill, Colin, 14, Clifton Drive, Abingdon
Oxfordshire (GB)**

(74) Representative: **Wallace, Walter, British Gas
Corporation Patents Department 326 High Holborn,
London, W1CV 7PT (GB)**

(54) **Wheel probe for ultrasonic inspection.**

(57) A wheel probe for use on a pipeline inspection vehicle for the purpose of ultrasonically inspecting the wall of the pipe, the wheel probe comprising a solid annular rim (22) made of a non-deformable material through which sound will pass, and side members (24) which together with the rim (22) define a hollow chamber, an ultrasonic transducer or transducers (31) located within the chamber and positioned adjacent the inside surface of the rim (22) for directing and receiving sound through the rim (22), and the space between the transducers (31) and the rim (22) being filled with an acoustic coupling liquid, and a solid resilient tyre member (32) mounted on the outside surface of the rim (22).

0001474

## Improvement in or relating to Ultrasonic Testing

This invention relates to wheel probes for insertion into the bore of a pipe for the purpose of ultrasonically inspecting the wall of the pipe.

One form of known wheel probe comprises a hollow wheel assembly having an inflatable tyre around its outer circumference, and ultrasonic transducers located within the wheel assembly. The transducers are positioned for directing and receiving sound through the inflatable tyre. In operation, the tyre is urged into contact with the surface to be examined, and an acoustic coupling fluid is maintained between the inflatable tyre and the surface to ensure that adequate coupling is achieved.

In some applications it is impossible, or impractical, to use a coupling fluid between the inflatable tyre and the surface to be examined. For example, in the case where it is desirable to examine many miles of pipe lines conveying natural gas.

If one accepts that there are instances when one cannot use a coupling fluid between the tyre and the surface to be examined, then the natural solution would be to force the inflated tyre into dry contact with the surface. However, this requires the tyre to be inflated to extremely high pressures to withstand the forces required to ensure adequate contact between the tyre and the surface.

In addition to the problem of inflating such tyres to high pressures in the case of examining many miles of gas pipe lines there are the problems of wear of the tyres, the possibility of punctures caused by encountering sharp obstructions at some weldments, and the material of the tyre must be chosen so as not to be deleteriously affected by the gas flowing in the pipe line.

An object of the present invention is to provide an improved wheel probe designed to remedy the aforesaid disadvantages and limitations of known wheel probes.

According to the present invention there is provided a wheel probe for insertion into the bore of a pipe for the purpose of ultrasonically inspecting the wall of the pipe, the wheel probe comprising a solid annular rim made of a non-deformable material through which sound will pass, and side members which together with the rim define a hollow chamber, an ultrasonic transducer located within the chamber and positioned adjacent the inside surface of the rim for directing and receiving sound through the rim, and a solid resilient tyre member mounted on the outside surface of the rim.

Preferably the annular rim is made of polymethylmethacrylate.  One suitable brand is that known by the Registered Trade Mark Perspex.

Preferably the tyre is made of polyurethane, polythene, or a rubber compound.

The inside surface of the rim may be shaped to be parallel to the transmitting and receiving surface of the transducer, or transducers, although preferably,  the transducer  or transducers may be spaced away from the inside circumferential surface of the annular rim and a suitably shaped block made of a material through which sound will pass, and which conforms with the sound transmitting or receiving face of the transducer and the inner circumferential surface of the rim, may be located between the transducer and the rim, and any space between the block and the rim being filled with a film of acoustic coupling liquid through which ultrasound will pass.

of two linear bearings 19 which allow it to slide along the shafts 13.

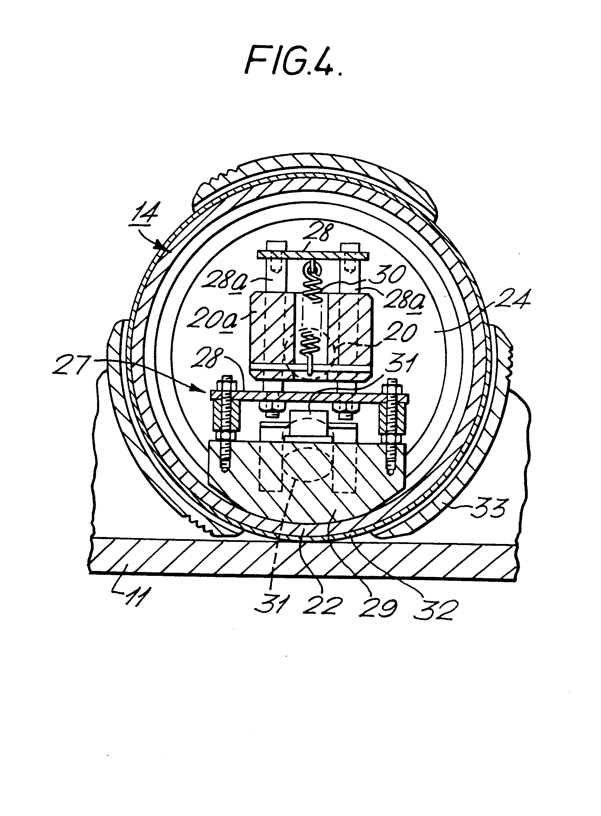

The main wheel assembly 14 is mounted for rotation on the free end of a fixed spindle 20 which is secured at one of its ends to a slide member 21 of the first mounting member 16.    The main wheel assembly 14 is shown in greater detail in Figures 3 and 4 and comprises a hollow housing made up of a solid annular rim 22 made of Perspex (a Registered Trade Mark) and two end plates 23, 24 which are mounted on bearings 25 on the spindle 20 so as to be freely rotatable on the spindle 20. Oil seals 26 are provided between the end plates 23, 24 and the spindle 20 and "O" ring seals are provided between the end plates 23, 24 and the rim 22.    An ultrasonic probe assembly 27 is resiliently carried by the spindle 20 and the hollow housing so formed contains an acoustic coupling medium (not shown) such as, for example, a mixture of glycerol and water loaded with particles of carbon, for example graphite, or molybdenum disulphide.    The size of the particles is chosen to be such as not to attenuate sound of the frequency produced by a given transducer or transducers of the ultrasonic probe assembly with which the medium is used, but at the same time to attenuate sound of other unwanted frequencies.

The ultrasonic probe assembly 27 comprises a support structure, consisting of brackets 28 and rods 28a, which is arranged to support a nylon block 29 upon which are mounted a plurality of transducers 31, for transmitting ultrasound into the wall of the pipe 11 and for receiving sound scattered or reflected from the wall of the pipe 11.    The block 29 is urged against the inside surface of the rim 22 by a tension spring 30 which is anchored between one of the brackets 28 and a pin secured in a central block 20a which forms part of the spindle 20.    The rods 28a are slidably supported in the spindle block 20a for linear movement of the probe Alternatively, the transducer may be spaced away from the inside surface of the rim and the space between the transducer and the rim filled with said coupling liquid through which sound will pass. An example of such a liquid is a mixture of glycerol and water with solid particles, such as for example, graphite or molybdenum disulphide in suspension.

An embodiment of the present invention will now be described, by way of an example, with reference to the accompanying drawings in which:-

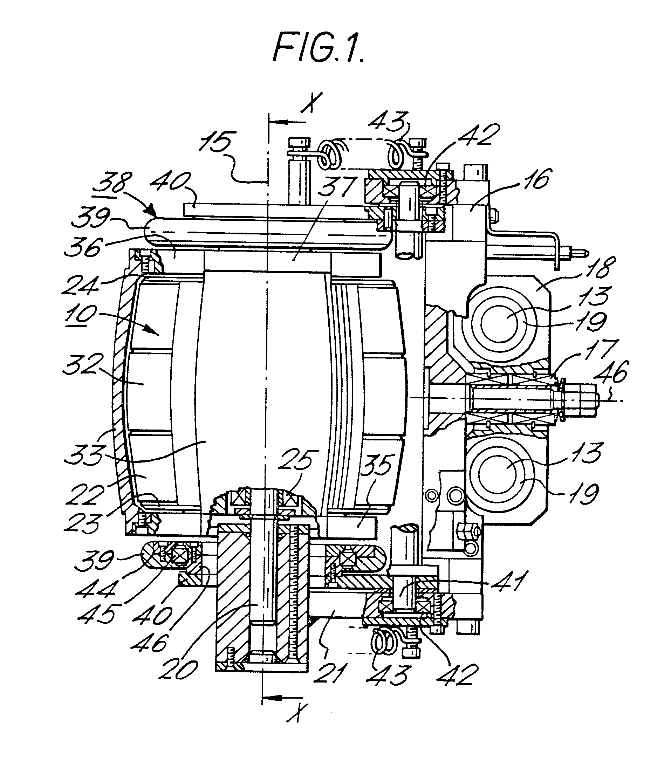

Figure 1  is a plan view, partly in section, of a wheel probe constructed in accordance with the present invention.

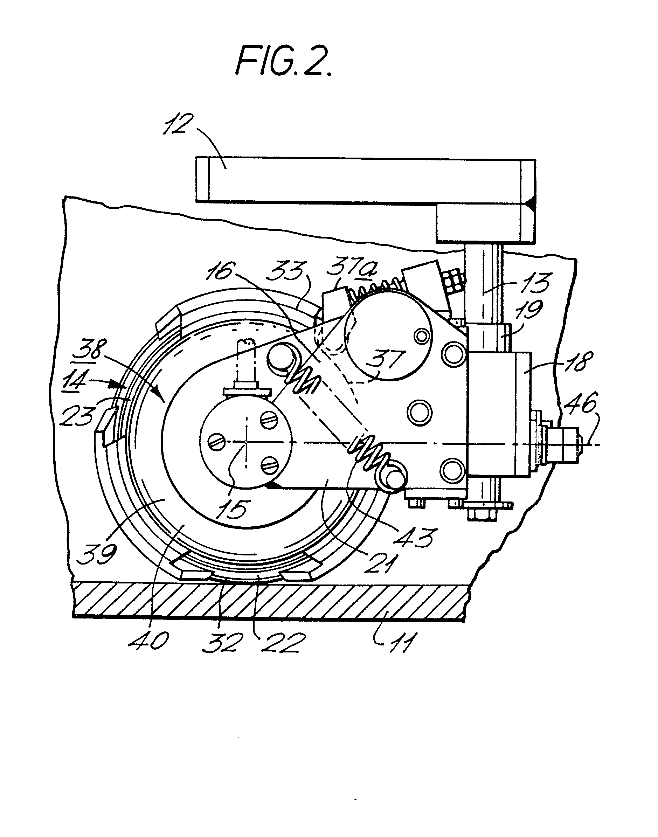

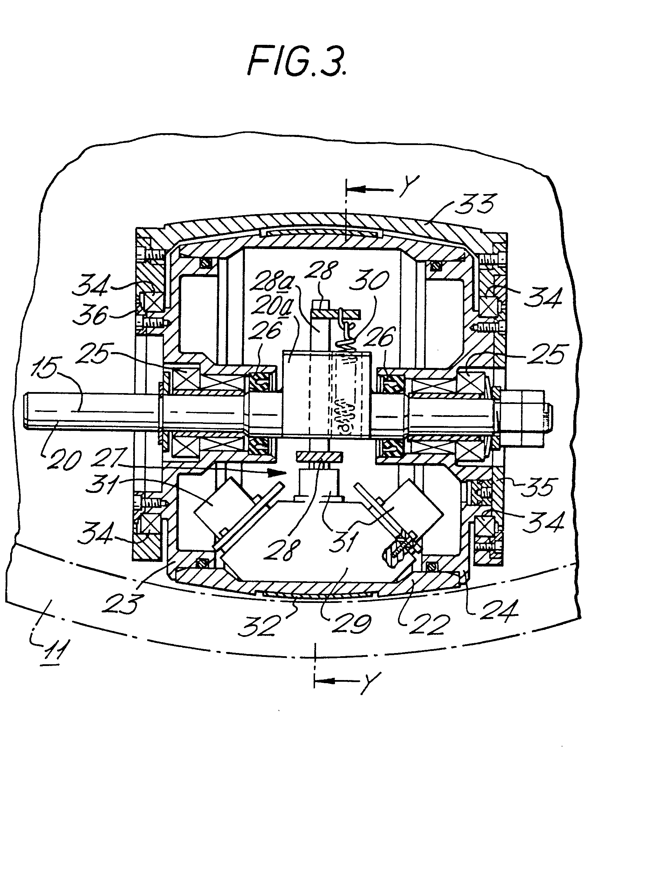

Figure 2  is a side elevation of the wheel probe of Figure 1.

Figure 3  is an elevation of the main wheel assembly of the wheel probe of Figure 1 sectioned along line X-X of Figure 1.

Figure 4  is a sectional view of the main wheel assembly of Figure 3 sectioned along line Y-Y of Figure 3.

Referring to the drawings there is shown a wheel probe 10 for insertion into a bore of pipe 11. A number of such probes are mounted on a remotely controlled vehicle which is caused to travel along the bore of the pipe 11. Each wheel probe 10 is secured to the vehicle by means of a support member 12 which is fixed securely to the vehicle. The support member 12 has two shafts 13 which, in use, extend in a radial direction with respect to the pipe 11.

The wheel probe 10 comprises a main wheel assembly 14 mounted for rotation about axis 15 in a first mounting member 16 which is itself mounted in a bearing 17 in a second mounting member 18 for rotation about an axis normal to the axis of rotation of the main wheel assembly 14. The second mounting member 18 is mounted on the shafts 13 by way assembly. The block 29 is shaped to conform with the shape of the inside surface of the rim 22, so as to ensure that the beams of sound from the transducers 31 enter the pipe wall at a predetermined preferred angle, and that the acoustic coupling medium is permitted to penetrate any gaps between the transducers 31 and the block 29 and between the block 29 and the rim 22. Electrical leads (not shown) from the transducers 31 pass along a bore (not shown) in the spindle 20 through seals which prevent the acoustic coupling medium leaking from the wheel assembly.

The outer rim 22 is barrel shaped, that is to say that it has a curved profile in a direction along the axis of rotation, and is provided with a tight-fitting, flexible deformable tyre 32 made of, for example, polyurethane or other material which will transmit sound.

Around the wheel assembly is a close-fitting independently rotatable shield 33. The shield 33 has three windows through which projects a sector of the wheel assembly 14. The shield 33 is mounted on the outer race of ball bearings 34 the inner races of which are secured to the end plates 23, 24 of the wheel assembly 14 by end plates 35, 36. The outer circumference of the shield 33 at each side of the shield has a number of recesses 37 into which locate spring biased cam-followers, e.g. 37a, which ensure that the shield 33 assumes a preferred orientation where any one of the windows is located alongside the block 29 so that a portion of the wheel assembly adjacent the block 29 projects through one of the windows.

The edges of each window are shaped so that in normal use the wheel assembly contacts the pipe wall and the shield 33 is just clear of the surface of the wall of the pipe 11. In the event that the wheel assembly 14 encounters an obstruction, such as, for example a weld region, which could damage the rim 22 or tyre 32, the shield 33 snags on the obstruction and is rotated to pass between the rim 22 and the pipe 11, at the same time overriding the cam-followers which locate in recesses 37. In this way the rim 22 is lifted clear of the obstruction until the next window around the shield 33 is located adjacent the block 29, whereupon the cam followers locate in fresh recesses 37 to hold the shield 33 with a window adjacent the block 29.

The first mounting member 16 also carries a guide wheel assembly 38. The guide wheel assembly 38 comprises two guide wheels 39 each mounted on a side arm 40 which is itself secured to a shaft 41 which is mounted in bearings 42 in the side member 21 of the first mounting member 16.

The guide wheel assembly 38 pivots about the longitudinal axis of the shaft 41 and is suspended on two springs 43 fixed to the side members 21 of the first mounting member 16.

The guide wheels 39 are made of metal and comprise an outer rim 44 mounted on ball bearings 45 carried by a plate 46 which is bolted to the side members 40. The axes of rotation of the guide wheels 39 are co-axial with the axis 15 of the main wheel assembly 14 and the guide wheels 39 are of slightly smaller diameter than the diameter of the rim 22.

In operation, the wheel probe 10 is positioned in the bore of pipe 11 with the axis 46, about which the first mounting member 16 pivots, aligned with the longitudinal axis of the bore of pipe 11 so that the tyre 32 on the outer rim 22 is pressed into intimate contact with the bore of pipe 11 at a point on a line which is aligned with the longitudinal axis of the pipe 11 by compression springs (not shown) on the shafts 13.

The guide wheels 39 also touch the wall of the pipe 11, and therefore with the main wheel assembly 14 provides three points of contact with the pipe in a common plane which is transverse to the bore of the pipe 11. If the wheel probe 10 is offered up to the pipe 11 and is not in the correct position, one guide wheel 39 will be at a slightly higher position in the bore and will tilt the first mounting member 16 about axis 46 to align the rim 22 of the main wheel assembly 14 at the correct position where the rim 22, and hence block 29, is arranged so that it is exactly normal to a tangent to the wall of the pipe 11 at the point of contact.

In an alternative wheel probe arrangement in accordance with the invention the transducers 31 are securely (rather than resiliently) supported by the spindle 20, 20a in the positions shown in Figures 3 and 4, but the block 29 is omitted and acoustic coupling of ultrasound between the transducers and the internal surface of the rim 22 is achieved by said acoustic coupling medium which fills the space therebetween.

CLAIMS:

1. A wheel probe for insertion into the bore of a pipe for the purpose of ultrasonically inspecting the wall of the pipe, the wheel probe comprising a solid annular rim (22) made of a non-deformable material through which sound will pass, and side members (23, 24) which together with the rim (22) define a hollow chamber, an ultrasonic transducer or transducers (31) located within the chamber and positioned adjacent the inside surface of the rim for directing and receiving sound through the rim, and a solid resilient tyre member (32) mounted on the outside surface of the rim.

2. A wheel probe as claimed in Claim 1, wherein said solid annular rim (22) is made of polymethylmethacrylate.

3. A wheel probe as claimed in Claim 1 or Claim 2, wherein said solid resilient tyre member (32) is made of polyurethane, polythene or a rubber compound.

4. A wheel probe as claimed in Claim 1, Claim 2 or Claim 3, wherein the hollow chamber is fluid tight and contains a liquid acoustic coupling medium through which ultrasound will pass.

5. A wheel probe as claimed in Claim 4, wherein said transducer, or transducers (31) is or are spaced away from the inside circumferential surface of the annular rim (22) and a suitably shaped block (29) made of a material through which sound will pass, and which conforms with the sound transmitting or receiving face of said transducer(s) and the inner circumferential surface of the rim, is located between the transducer(s) and the rim, and any space between the block and the rim being filled with a film of said acoustic coupling medium.

6. A wheel probe as claimed in Claim 4, wherein said transducer(s) is/are spaced away from the inside surface of the rim and the space between the transducer(s) and the rim filled with said acoustic coupling medium.

7. A wheel probe as claimed in Claim 6, wherein said acoustic coupling medium is a mixture of glycerol and water with solid particles, such as graphite or molybdenum disulphide in suspension.

8. A wheel probe for insertion into the bore of a pipe for the purpose of ultrasonically inspecting the wall of the pipe as claimed in any preceding Claim, substantially as shown in and as hereinbefore described with reference to Figures 1 to 4 of the accompanying drawings.

1/4

FIG.1.

FIG.2.

# FIG.3.

4/4

FIG.4.

## EUROPEAN SEARCH REPORT

European Patent Office

Application number
EP 78 30 0224

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | US - A - 3 908 446 (W.F. MRUK) <br><br> * Figures 2-4 * <br><br> -- | 1,4,5 | G 01 N 29/04 <br> F 17 D 5/00 <br> F 16 L 55/00 |
| | GB - A - 1 294 404 (SECRETARY OF STATE FOR DEFENCE) <br><br> * Claims 1 and 4 * <br><br> -- | 1,4,5,6 | |
| | GB - A - 1 118 141 (NATIONAL RE-SEARCH DEVELOPMENT CORP.) <br><br> * Complete * <br><br> -- | 1,2,3 | TECHNICAL FIELDS SEARCHED (Int.Cl.²) <br><br> F 17 D 5/00 <br> G 01 B 17/02 <br> G 01 N 29/00 <br> 29/04 |
| | US - A - 3 257 843 (J.V. COWAN) <br><br> * Figures 1,2; columns 3-5 * <br><br> -- | 1,3,6 | |
| | US - A - 2 724 783 (SOCIETE A RES-PONSABILITE LIMITEE REALISATIONS ULTRASONIQUES) <br><br> * Figure 3 * <br><br> -- | 6 | |
| | DE - A - 2 636 448 (ROCKWELL) <br><br> * Page 3 * <br><br> -- | 7 | CATEGORY OF CITED DOCUMENTS <br><br> X: particularly relevant <br> A: technological background <br> O: non-written disclosure <br> P: intermediate document |
| P | US - A - 4 055 990 (F.V. TOPPING) <br><br> * Claims 10 and 12; column 6, figure 5 * <br><br> -- | 1,2,3,4,6 | T: theory or principle underlying the invention <br> E: conflicting application <br> D: document cited in the application <br> L: citation for other reasons |
| A | US - A - 3 810 384 (D.J. EVANS) <br><br> -- | | &: member of the same patent family, corresponding document |

The present search report has been drawn up for all claims

| Place of search | Date of completion of the search | Examiner |
|---|---|---|
| Berlin | 03-11-1978 | SCHWARTZ |

EPO Form 1503.1 06.78